# EUROPEAN PATENT APPLICATION

(11) **EP 3 643 685 A1**
(43) Date of publication of application: **29.04.2020**
(21) Application number: 19203633.3
(22) Date of filing: 16.10.2019
(51) Int. Cl.: C02F 1/50, C02F 1/00, E03C 1/00

(54) **A METHOD FOR DISINFECTION AND CLEANING OF AT LEAST ONE PART OF A DEVICE INTENDED FOR RECYCLING OF WATER**

(30) Priority: 23.10.2018 SE 1851305
(71) Applicant: Orbital Systems AB, 211 20 Malmö (SE)
(72) Inventor: REHN, Gustav, 224 72 LUND (SE); ESKILANDER, Stephan, 224 75 LUND (SE); DENNBO, Johanna, 247 34 Södra Sandby (SE)
(74) Representative: AWA Sweden AB

(57) **Abstract**

The present invention describes a method for disinfection and cleaning of at least one part of a device intended for recycling of water, said device comprising at least a flow path for recycled water, a fresh water inlet, a recirculation water inlet and a recirculation water outlet, a user drain and a user outlet, and said method involving flowing at least citric acid into said at least one part intended to be disinfected and cleaned, and wherein the user outlet is one part being disinfected and cleaned.

## Description

### Field of the invention

The present invention relates to a method for disinfection and cleaning of a water recycling device.

### Technical Background

There are different water recycling devices known today. One example is shown in WO 2013/095278 where there is disclosed a hybrid device for a recirculation shower, allowing purification and either recycling of water or discarding of water. The hybrid device comprises a recirculation loop, a filter system with a pre-filter and a nano-filter, at least one filter quality sensor, and the device is arranged to redirect the water from recirculation to drainage when the at least one filter quality sensor indicates the need thereof.

The present invention is directed to a disinfection and cleaning method suitable for water recycling devices. The water recycling devices may be of any application type, such as e.g. recirculating showers, recirculating dishwashers or recirculating washing machines. The method is especially suitable for water recirculating devices used domestically, but also other usage is totally possible. Examples are recirculating showers systems used in hotels and bathhouses. Fact is that any type of such system, used industrially or domestically, is of interest for the method according to the present invention.

Moreover, it should be noted that the common feature of the water recirculating systems intended above is the possibility of recirculating water to be recycled and reused. Water being contaminated, or a liquid fraction containing contaminants, however, should be flowed to a drain. Also this fraction may be recycled in another system or collected depending on the kind of system and type of contaminants.

The present invention is directed to providing an optimal disinfection and cleaning method for water recirculating systems mentioned above.

### Summary of the invention

The latter stated purpose above is achieved by a method for disinfection and cleaning of at least one part of a device intended for recycling of water, said device comprising at least a flow path for recycled water, a fresh water inlet, a recirculation water inlet and a recirculation water outlet, a user drain and a user outlet, and said method involving flowing at least citric acid into said at least one part intended to be disinfected and cleaned, and wherein the user outlet is one part being disinfected and cleaned.

In relation to the method according to the present invention it should be mentioned that the method involves both disinfection implying killing or inactivating bacteria and microorganisms, and also cleaning implying to remove dead or inactivated bacteria and microorganisms from tubing etc. The latter step can be seen as an antifouling step, so that the material is possible to be flush out from the water recirculating system or device so such material is not accumulated in the system.

### Specific embodiments of the invention

Below there is disclosed and discussed different embodiment of the method according to the present invention.

As understood from above, the method according to the present invention involves using at least citric acid as a disinfecting agent. Citric acid may be provided alone or in combination with other substances. Moreover, citric acid may be provided in different forms and in different concentrations. According to one specific embodiment of the present invention, citric acid used has a concentration of at least 40%, e.g. above 50%.

Furthermore, also the temperature used in the method may be of relevance. At a high temperature cells of bacteria and microorganisms are more susceptible to treatment with citric acid. Therefore, according to one specific embodiment, the temperature used in the method is at least 40ºC, preferably at least 50ºC, such as e.g. around 60ºC or even above.

Moreover, according to one specific embodiment, the method involves flowing both an antibacterial agent for the disinfection and also an antifouling agent for the cleaning into the part intended to receive the disinfection and cleaning. Also in this case the antibacterial agent may be citric acid. Furthermore, the flowing of the antibacterial agent and antifouling agent may be performed simultaneously or sequentially. To give one example of a substance to use together with citric acid is sulfamic acid, such as sulfamic acid in at least 10% concentration, however not too high. The sulfamic acid may be used to enable as an antifouling agent which removes rust and lime scale and similar chemicals.

The substances intended to be used in the method according to the present invention have the advantage of being environmental friendly and biologically degradable to a large extent. As the disinfection and cleaning method according to the present invention is intended to be used in devices intended to save water and energy the aspect above is of great importance. The usage of environmental friendly and biologically degradable substances which has a very low negative impact on water and energy loss and use of chemicals is of course preferable in water recirculating systems, and in fact also in other systems where water is used and some amounts are wasted.

Moreover, citric acid, and also possible extra additives, such as several enzyme or surfactant based substances are easy to use and inexpensive.

As mentioned, the device intended for the method according to the present invention comprises a flow path for recycled water. Other units of the device are a fresh water inlet, a recirculation water inlet and a recirculation water outlet, a user outlet, a pump, sensors, valves, a heater and a filter. One part of special interest for the method is the user outlet. In this part and the tubing in close proximity to the user outlet there is an evident risk for growth of bacteria and microorganisms. Therefore, this part is of special interest for the method according to the present invention.

The method according to the present invention involves providing citric acid into the water recirculation device to enable at least disinfection of the user outlet. According to specific embodiment, the citric acid is provided by the user into the user drain. This may be performed by a simple operation at a decided time when a cleaning loop of the system should be made. The user can simply place a solid material containing citric acid (see below) or pour aqueous citric acid into the drain.

One possible means for adding the substance(s) including citric acid and possible other components used in the method according to the present invention is a dosage container. Therefore, according to one embodiment of the present invention, citric acid is provided in a dosage container which content is poured into the user drain and thus into the recirculation loop to be flowed into the filter, the heater and the user outlet. Also in this case the substance(s) reach the user outlet and disinfects and cleans also this part.

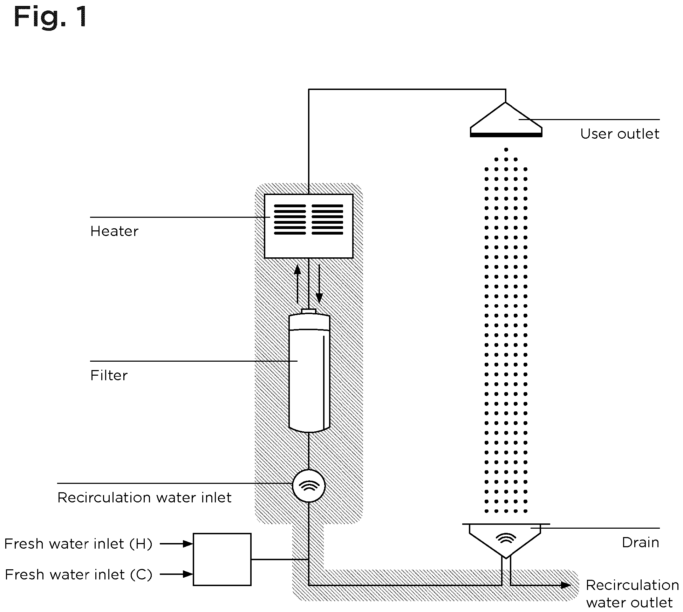

According to yet another specific embodiment of the present invention, the citric acid is provided by the user into a fresh water tank containing fresh water from the fresh water inlet. One schematic example of a fresh water tank is given in fig. 1 as a box receiving fresh cold and hot water. This type of operation is also simple, and to give one example this can be performed by placing a solid piece containing bound citric acid into an opening of the fresh water tank. This opening is openable and closable.

As understood from above, according to one embodiment, the citric acid is bound into a solid material. This solid material may be provided in different forms and shapes, and also including other substances besides citric acid in crystalline form. Another possible example is a dosing capsule containing citric acid.

As may be understood from above, as the cleaning process is performed in a water recirculation system, this implies that also citric acid may be recirculated during a cleaning operation. Therefore, according to one specific embodiment of the present invention, the citric acid is recirculated in the flow path for recycled water during a disinfection and cleaning cycle. According to yet another specific embodiment, a disinfection and cleaning cycle is at least 90 seconds, such as in the range of 2-5 minutes. Moreover, the time point for performing the disinfection and cleaning may vary, but is intended to be performed at a decided time. This can be set by the system as such, e.g. when sensors are giving data to the processor that it is time for performing a disinfection and cleaning cycle. In such a case the system will inform a user that the method should be performed. Also a set certain use period (weeks, months) or a number of use cycles may be the parameters deciding when the method for disinfecting and cleaning should be performed.

As mentioned above, the water recirculation system may comprise also other components. One such is a heater. Therefore, according to yet another embodiment in line with this, the process order subsequent to the filter is the heater and then finally the user outlet and wherein flowing of citric acid is performed into at least the user outlet of the device. Also in this case only citric acid may be used, but also in combination with an enzyme based and/or surfactant based solution. It should be noted that combinations of additives such as sulfamic acid together with one or more enzymes and/or surfactants are also possible to use together with citric acid according to the present invention.

According to yet another specific embodiment of the present invention, the method also involves detecting citric acid in the device. This may have the additional benefit to also include a controlling possibility so that one or more sensors detect and possible measures the concentration of citric acid or the like and send a signal or data thereof to the control unit.

As mentioned above, the water recirculating device may be of different type. Examples are showers, both domestically or at hotels or bathhouses, washing machines, sinks or dish washers etc. According to one embodiment, the device intended for usage and recycling of water is a recirculating shower. As should be evident, when the disinfection and cleaning method is being performed, then regular use is not performed at the same time.

Furthermore, the present invention is also directed to use of or using citric acid for flowing the same into at least one part of a device intended for recycling of water, said device comprising at least a flow path for recycled water, a fresh water inlet, a recirculation water inlet and a recirculation water outlet, a user drain and a user outlet, to enable disinfection and cleaning of at least the user outlet. All embodiments disclosed above may be relevant as embodiments also in this case.

### Detailed description of the drawings

In fig. 1 there is shown a water recirculating device, in this case a recirculating shower, in which the method according to one embodiment of the present invention may be used. As seen in fig. 1, the device comprises a fresh water inlet, both cold and hot, the water flowed in here meets a recirculation loop comprising a recirculation water inlet, which in fact is one point along the loop before subsequent key units being a filter and then a heater. In the flow path up-streams, the user outlet is provided subsequently to the heater. As seen in fig. 1 there is arranged a drain being a point from which water is either wasted via the water recirculation outlet or sent to recirculation. As said above, to perform the method according to the present invention, the opening of valves (not shown) may be used. Moreover, sensors providing data to the processing unit and also a pump providing recirculating force are other units not shown in fig. 1.

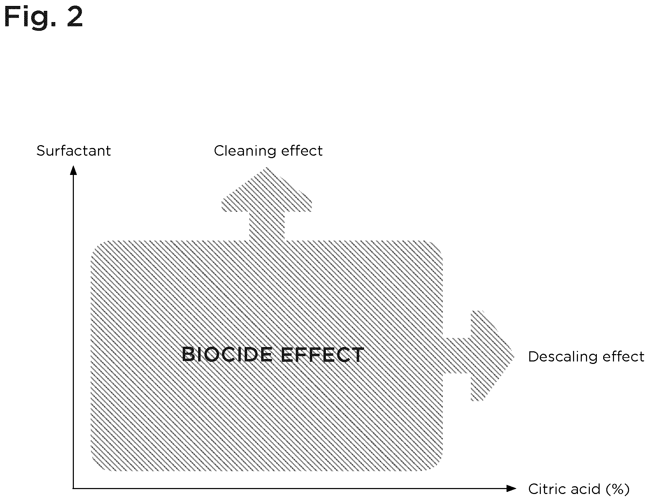

In fig. 2 there is shown a schematic view of the disinfecting (descaling) effect and cleaning effect when using citric acid as the disinfecting agent and a surfactant as the cleaning agent according to the present invention.

## Claims

1. A method for disinfection and cleaning of at least one part of a device intended for recycling of water, said device comprising at least a flow path for recycled water, a fresh water inlet, a recirculation water inlet and a recirculation water outlet, a user drain and a user outlet, and said method involving flowing at least citric acid into said at least one part intended to be disinfected and cleaned, and wherein the user outlet is one part being disinfected and cleaned.

2. The method according to claim 1, wherein the citric acid has a concentration of at least 40%.

3. The method according to claim 1 or 2, wherein the temperature used in the method is at least 40ºC, preferably at least 50ºC.

4. The method according to any of claims 1-3, wherein the method involves flowing both an antibacterial agent for the disinfection and also an antifouling agent for the cleaning into the part intended to receive the disinfection and cleaning.

5. The method according to any of claims 1-4, wherein the citric acid is provided by the user into the user drain.

6. The method according to any of claims 1-4, wherein the citric acid is provided by the user into a fresh water tank containing fresh water from the fresh water inlet.

7. The method according to any of claims 1-6, wherein the citric acid is bound into a solid material.

8. The method according to any of claims 1-7, wherein the device also comprises a pump, sensors, valves, a heater and a filter and wherein the method involves flowing citric acid into the flow path so that at least the filter and the user outlet, and tubing between the filter and user outlet is disinfected and cleaned.

9. The method according to any of claims 1-8, wherein the citric acid is recirculated in the flow path for recycled water during a disinfection and cleaning cycle.

10. The method according to claim 9, wherein a disinfection and cleaning cycle is at least 90 seconds.

11. The method according to any of claims 1-10, wherein the method also involves detecting citric acid in the device.

12. The method according to any of claims 1-11, wherein the device intended for usage and recycling of water is a recirculating shower.

13. Use of citric acid for flowing the same into at least one part of a device intended for recycling of water, said device comprising at least a flow path for recycled water, a fresh water inlet, a recirculation water inlet and a recirculation water outlet, a user drain and a user outlet, to enable disinfection and cleaning of at least the user outlet.
